# EUROPEAN PATENT SPECIFICATION

(11) **EP 1 712 123 B1**
(45) Date of publication and mention of the grant of the patent: **22.06.2011**
(21) Application number: 06112235.4
(22) Date of filing: 05.04.2006
(51) Int. Cl.: A01F 25/20

(54) **Device for removing and processing silage for cattle**
Silageentnahme- und Verarbeitungsvorrichtung
Dispositif de désilage et traitement du silage

(30) Priority: 11.04.2005 NL 1028732
(43) Date of publication of application: 18.10.2006
(60) Divisional application: 10180662.8
(73) Proprietor: Trioliet Mullos B.V., 7575 BE Oldenzaal (NL)
(72) Inventor: Liet, Cornelis, Hendricus, 7581 PJ, Losser (NL); Van der Plas, Nicolaas, 7576 WX, Oldenzaal (NL)
(74) Representative: De Vries & Metman

(56) References cited:
- DD-A1- 120 176
- DE-A1- 3 318 338
- DE-A1- 3 602 403
- DE-A1- 3 805 300
- DE-A1- 4 210 479
- DE-U1- 9 303 751
- DE-U1- 20 104 779
- NL-C2- 1 001 864

## Description

The invention relates to a device for removing and processing silage for cattle, comprising a chassis with one or more axles, a removing unit for removing silage from a stock thereof, which removing unit comprises a pivot arm which is pivotally supported about a pivot axis at one end and which carries a removing member at its free end, a receptacle for removed silage, a container for removed silage and conveyor means for conveying silage from said receptacle to said container, as well as to a removing unit for removing silage from a stock thereof.

Such a device and removing unit are known from DE-U-201 04 779and also from DE-9303751-U, which discloses the preamble of claim 1. The removing member of the known device is embodied as a cutter element, which loosens the silage from the stock into very small parts. The drawback of this is that the quality of the silage rapidly deteriorates and a relatively great deal of silage is lost upon removal thereof.

From NL-A-9500544 a device for detaching and processing silage is known in which the removing member is embodied as a cutting board. The cutting board is pivotally connected to the end of a pivot arm. The device described in said document is embodied as a device which is pulled forward, for example by a tractor. Said known construction is not suitable for use with a device in which a precisely metered amount of silage is to be supplied to the container, because large chunks of silage are cut from the stock and deposited into the container in their entirety.

The object of the invention is to provide an improved device of the kind referred to in the introduction.

In order to accomplish that object, the device is according to claim 1.

In this way a device for removing and processing silage for cattle is obtained by means of which silage can be removed from a stock thereof and the removed silage can be discharged practically directly from the cutting board into the receptacle and subsequently into the container. According to the invention, the discharge means enable an even discharge of the detached silage into the receptacle while the silage is being cut out, so that the detached silage can be transported to the container in an even manner by the conveyor means. This makes it possible to realise a precise metering of the amount of silage. The removing process can be stopped the moment the desired amount is reached, so that no silage is wasted. Furthermore it is achieved in this manner that the conveyor means are evenly loaded.

According to an advantageous embodiment, the roller is circumferentially provided with discharge elements, preferably with one or more helically extending strips, which generate a force towards a central region of the roller upon rotation of the roller.

According to an advantageous embodiment of the device according to the invention, the cutting board is movably connected to the free end of the pivot arm, and a mechanism is provided for adjusting the angle of the cutting board relative to the pivot arm, such that the spacing between the cutting blade and the pivot axis is smaller in a central position of the pivot arm than in a lower and an upper position of the pivot arm. This makes it possible to remove silage from a stock having a great height, with the cutting blade moving in a relatively steep cutting path over the entire height of the stock.

Preferably, the cutting board is movably connected to the free end of the pivot arm by means of a parallelogram linkage.

According to an advantageous embodiment of the invention, the position of the cutting board relative to the pivot arm can be adjusted by means of an adjusting element mounted between the cutting board and the pivot arm. This makes it possible to adjust the cutting depth of the cutting board in a fixed position of the device relative to the stock of silage while maintaining the desired steep cutting path of the cutting blade.

The invention will now be explained in more detail with reference to the drawing, in which a few embodiments of the device according to the invention are shown schematically.
Fig. 1 is a schematic side view of one embodiment of the device according to the invention.
Fig. 2 is a schematic top plan view of the device of Fig. 1, in which the cutting board is only shown schematically.
Fig. 3 is a schematic front view of the device of Fig. 1.
Fig. 4 is a larger-scale detail of the device of Fig. 1.
Fig. 5 is a front view corresponding to Fig. 3 of an alternative embodiment of the device of Fig. 1.
Fig. 6 is a larger-scale view of a part of the device of Fig. 1.
Fig. 7 is a larger-scale view of the detail of Fig. 4, which furthermore shows part of the cutting board.
Fig. 8 is a side view of an alternative embodiment of the device according to the invention.
Fig. 9 is a larger-scale view of a part of the device of Fig. 8.
Fig. 10 shows an embodiment not encompassed by the invention.
Figs. 11-13 show various embodiments of a cutting board for use in the device according to the invention.
Fig. 14 is a side view of a roller that can be used as a discharge means with the cutting board of the device of Fig. 1 or Fig. 8.
Fig. 15 is a side view of a roller that can be used as a discharge means with the cutting board of the device of Fig. 1 or Fig. 8.
Fig. 16 is a side view of an alternative embodiment of the device according to the invention.
Fig. 17 shows a part of the device of Fig. 16.

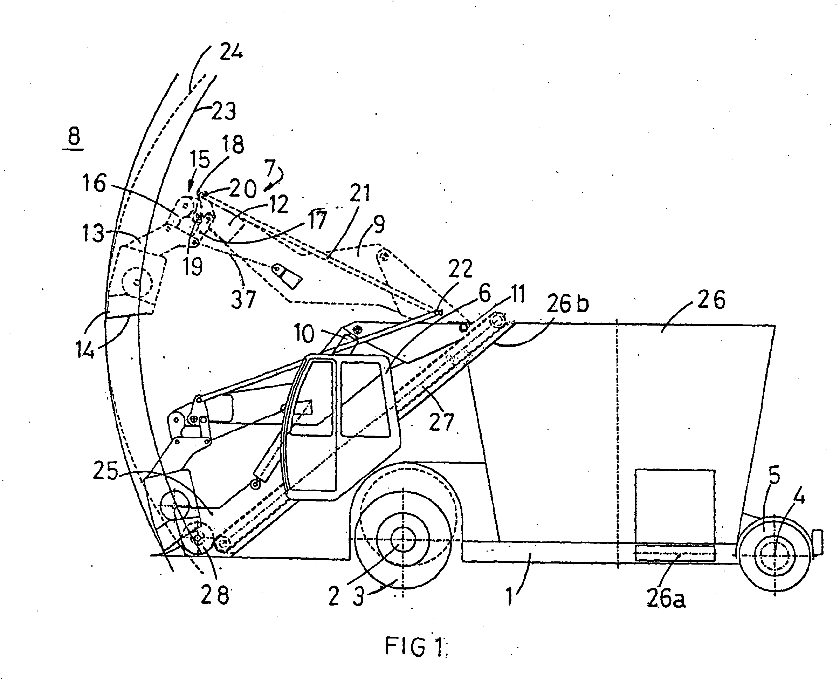

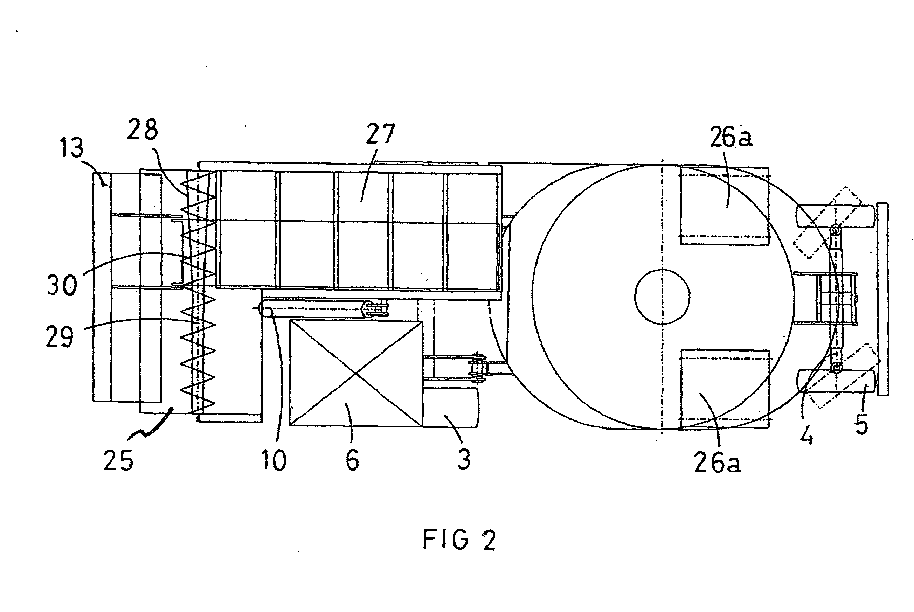

Figs. 1-3 show an embodiment of a device for removing and processing silage for cattle. Said device comprises a chassis 1 provided with a driven front axle 2 with front wheels 3 and a rear axle 4 with rear wheels 5. The driving motor for the front axle is not shown in the drawing. The rear wheels 5 can be steered in a manner that is not shown, as is indicated schematically by means of a broken line in Fig. 2. The device furthermore comprises a cabin 6 for a driver, who can control all the functions of the device from the cabin. An alternative to the so-called self-driving device that is shown in the drawing would be a tractor-drawn device without driving motor.

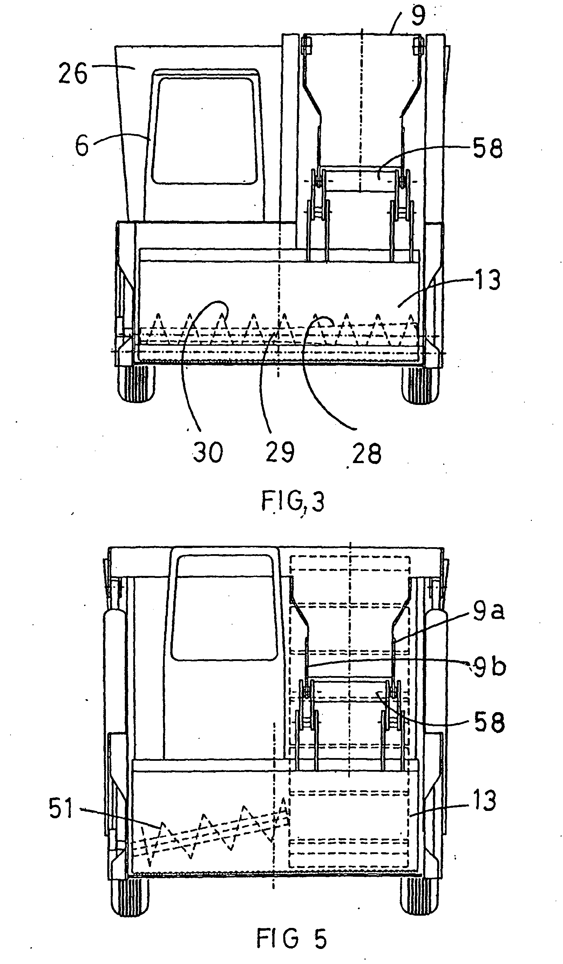

The device comprises a removing unit 7 for removing silage from a stock 8 (schematically indicated) thereof. The removing unit 7 is provided with a pivot arm 9, which can be pivoted upwards and downwards by means of a cylinder-piston assembly 10. The pivot arm 9 is pivotally supported about a pivot axis 11 at one end and carries a removing member embodied as a cutting board 13 at its free end 12. Said cutting board 13 is configured as a U-shaped cutting board in the embodiment that is described herein, each side of which U-shaped cutting board 13 carries two cutting blades 14, at least one cutting blade of which is driven to carry out a reciprocating cutting operation. The cutting blades 14 are shown in more detail in Fig. 5.

It is noted that instead of a U-shaped cutting board also an L-shaped cutting board or other type of cutting board may be used as the removing member. Furthermore, other types of cutting blades may be used.

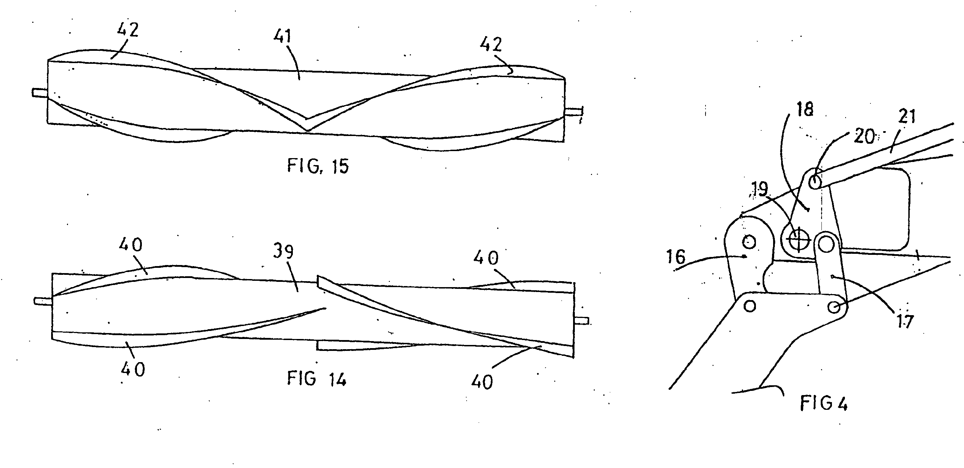

The cutting board 13 is movably connected to the free end 12 of the pivot arm 9 by means of a parallelogram linkage 15. The linkage 15, which is shown on a larger scale in Fig. 4, comprises two at least substantially parallel rods 16, 17, from which the cutting board 13 is suspended by means of pivot joints. The rod 16 is pivot-mounted to the free end 12 of the pivot arm 9. The rod 17 is pivotally connected to a steering plate 18, which is in turn pivot-mounted to the free end 12 of the pivot arm 9 at 19. The steering plate 18 is pivotally connected to a steering rod 21 at the position indicated at 20, which steering rod is pivotally connected at the opposite end to a fixed point 22 of the device, which point is located near the pivot axis 11 of the pivot arm 9.

The steering rod 21 and the steering plate 18 steer the parallelogram linkage 15 upon movement of the pivot arm 9 from an upper position to the lower position that is shown in Fig. 1, as a result of which the angle between the cutting board 13 and the pivot arm 9 changes such that the distance from the cutting blades 14 of the long side of the U-shaped cutting board 13 to the pivot axis 11 is smaller in a central position of the pivot arm 9 than in the upper and lower positions of the pivot arm. This means that the cutting path 23 that said cutting blades 14 describe at the upper side and the bottom side of the stock of silage 8 is steeper than a circular path indicated by a dashed line 24, with the pivot axis 11 as the centre thereof. As a result, the silage that is detached from the stock of silage 8 by the cutting board 13 can fall into a receptacle 25 of the device described herein more easily, and the detached silage is prevented from accumulating against the lower part of the wall of the stock of silage 8. In this way an even supply of silage detached by the cutting board 13 can be realised.

An even supply of detached silage to the receptacle 25 is important in order to realise an even supply of the silage from the receptacle 25 to an open container 26. The container 26 is supported on the chassis 1. In the device described herein, mixing elements (not shown) are present in the container 26 for mixing the silage with other feed components. A conical mixing worm may be used as the mixing element, for example. Furthermore, discharge means 26a (schematically indicated) are provided for discharging the mixed silage.

A conveyor 27 (schematically indicated) is provided for supplying the silage from the receptacle 25 to the container 26. Because of the even manner in which the silage is supplied to the container 26, it is possible to realise an exact desired weight of silage in the container. Weighing means (not shown) are provided for measuring the amount of silage that is supplied to the container 26, which weighing means comprise, for example, a display screen present in the cabin 6, on which the weight supplied to the container 26 is displayed. When roughly the desired weight has been reached, the removing process can be stopped by the driver.

Fig. 1 shows that the conveyor 27 extends partially above the container 26. A screening plate 26b is provided, which functions to prevent the silage that is present in the container 26 from being pressed against the bottom side of the conveyor by the mixing worm.

As Figs. 2 and 3 show, the receptacle 25 extends over the entire width of the chassis 1 and the cutting board 13, whilst the width of the conveyor 27 amounts to approximately half the width of the receptacle 25. The cabin 6 is disposed beside the conveyor 27. A cross conveyor 28 embodied as a worm conveyor is disposed in the receptacle 25 for supplying the silage collected in the receptacle 25 to the conveyor 27. The worm conveyor 28 has a central shaft 29 whose part located at the conveyor 27 expands conically towards the outer side, so that the height of the helical worm blade 30 decreases to practically zero from the centre to the outer end. This results in an even distribution of the silage across the width of the conveyor 27.

Fig. 5 schematically shows an alternative embodiment of the device, in which a worm conveyor 51 is mounted beside the conveyor 27 in the receptacle 25. Said conveyor worm 51 transports the removed silage from this part of the receptacle 25 to the conveyor 27.

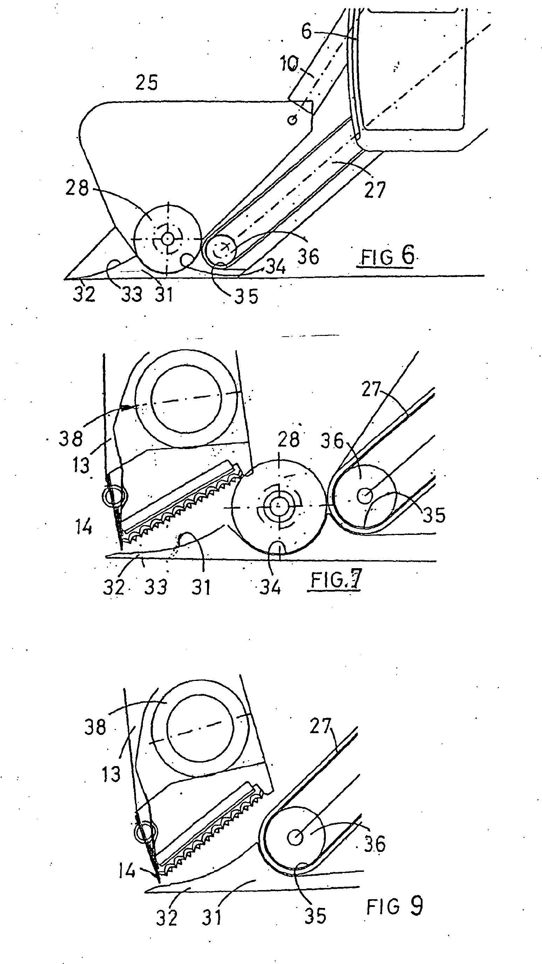

Figs. 6 and 7 are larger-scale sectional views of the receptacle 25. The receptacle 25 comprises a bottom plate or insertion plate 31 having an insertion side 32, which is moved over the floor on which the stock of silage 8 is present, as close to said floor as possible, against the wall of the stock of silage 8 and partially under said silage, for cutting out an amount of silage. In Fig. 1 a broken line indicates that the front axle 2 is movably supported in the chassis 1, so that the insertion plate 31 can be moved down onto the floor and under the silage of the stock 8 thereof.

As is shown in particular in Fig. 7, the insertion side 32 comprises an arcuate portion 33, which will be discussed yet hereinafter. Furthermore, the bottom plate 31 comprises an arcuate portion 34, which houses the cross conveyor 28. Contiguous to said second arcuate portion 34 is a third arcuate portion 35, which houses a return pulley 36 of the conveyor 27.

As is shown schematically in Fig. 1, an adjusting element 37, for example embodied as a cylinder-piston assembly, is provided between the cutting board 13 and the pivot arm 9. Said adjusting element can be used for adjusting the position of the cutting board 13 relative to the pivot arm for setting the thickness of the layer of silage that is to be removed from the stock of silage by the cutting board 13. In addition, said adjusting element 37 is used for retracting the cutting board 13 in the lower position of the cutting board 13, during which retracting movement the front cutting blade 14 moves in an arcuate path that corresponds at least substantially to the shape of the arcuate portion 33. As a result, practically all the removed silage is supplied to the cross conveyor 28 and subsequently to the conveyor 27.

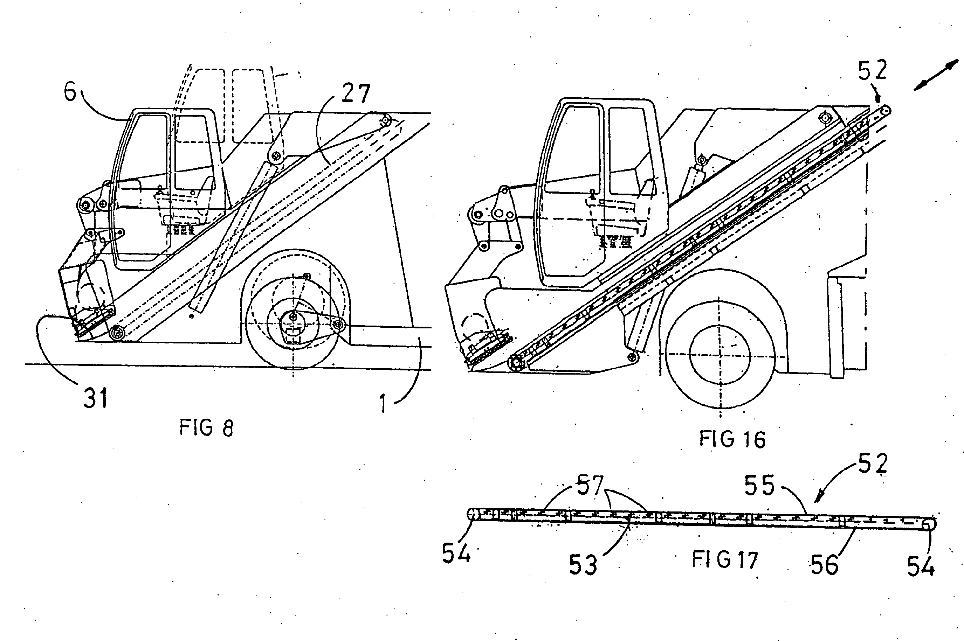

Fig. 8 shows an alternative embodiment, in which the conveyor 27 extends the entire width of the chassis 1. The cabin 6 is floatingly supported above the conveyor 27 in this embodiment. The cabin 6 is adjustable for height, as is indicated by a broken line. While the device is being driven, the cabin 6 is in the lower position, so that the overall height of the device remains within bounds. While silage is being removed, the cabin 6 takes up a high position, so that on the one hand sufficient free space is present between the cabin and the conveyor whilst on the other hand the operator will have a better view of the work. In this embodiment the bottom plate 31 of the receptacle 25 is configured without the arcuate portion 34, as is shown in Fig. 9.

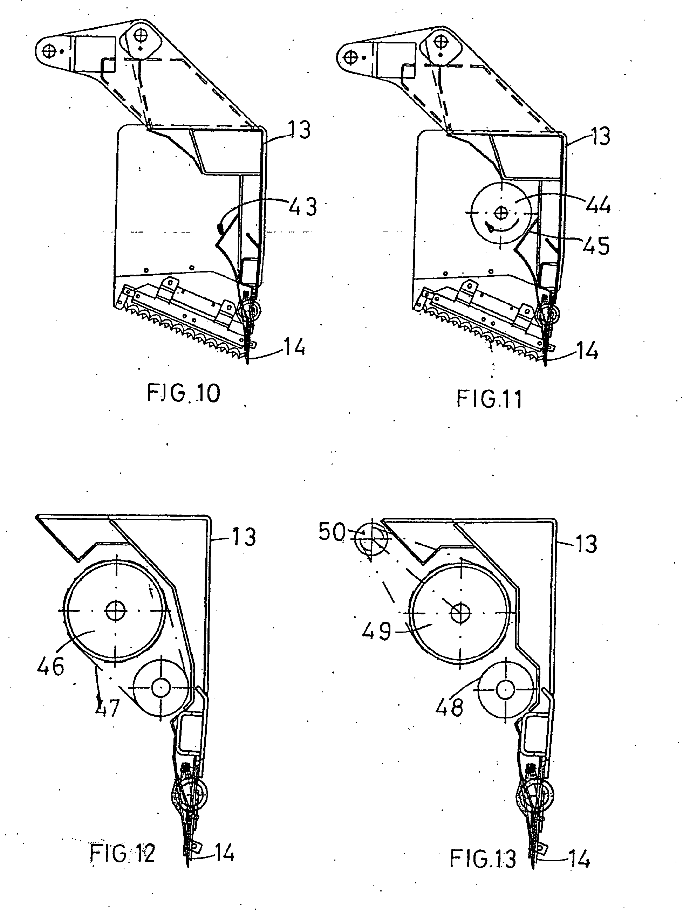

The cutting board 13 of the device that is shown in Fig. 1 is provided with discharge means 38 (schematically indicated in Fig. 1) on the inner side, which discharge the detached silage 8 from the cutting board 13. In the embodiment that is shown in Fig. 1, the discharge means are embodied as a rotated roller 39, which is shown in elevation in Fig. 14. Other embodiments of the discharge means 38 are also possible, and examples thereof are shown schematically in Figs. 10-13, which will be discussed yet hereinafter.

When the cutting board 13 cuts a layer of silage from the stock 8 in use, the discharge roller 39 forces the cutting gap open, as it were, so that significantly less force is required for moving the pivot arm 9 with the cutting board 13 down. In addition, the discharge roller 39 directly takes the detached silage from the cutting board 13, so that the silage falls down into the receptacle 25. The advantage of this is that no large amount of silage will collect in the cutting board 13, which would lead to high peak loads when the silage falls down into the receptacle and on to the conveyor. The discharge roller 39 provides an even discharge of the silage in small amounts thereof, thus preventing the receptacle 25 and the conveyor 27 from being subjected to peak loads. Furthermore, an even supply of the silage to the container 26 is ensured, so that the desired weight can be exactly determined.

As Fig. 14 shows, helically extending blades 40 are attached to the discharge roller 39, which blades exert a centrally oriented force on the silage upon rotation of the discharge roller 39, thereby transporting the silage towards the centre of the receptacle 25. The direction of rotation of the discharge roller 39, which is indicated by an arrow in Fig. 11, is such that the lower half of the discharge roller moves away from the cutting board 13.

Fig. 15 shows an alternative discharge roller 41, which is likewise configured with helical blades 42. This roller 41 may be used instead of the discharge roller 39 in the device of Fig. 1.

Figs. 11-13 show various embodiments of the discharge means 38. With the cutting board 13 that is shown in Fig. 10, which discloses an embodiment not encompassed by the invention, a guide plate 43 is provided as the discharge means 38. Said guide plate 43 deflects the detached silage sideways, so that the detached silage will fall down sooner. This variant is suitable for relatively loose silage material and for cutting out relatively thin layers of silage.

Fig. 11 shows a cutting board 13 in which a rotatably supported roller 44 and a guide plate 45 are used. The rotatable roller 44 is not driven in this case. The direction of rotation is indicated by means of an arrow, and the same direction of rotation applies when the roller 44 is driven. The direction of rotation is such that the lower half of the roller moves away from the cutting board and the detached silage is moved away from the stock thereof. On the one hand the cutting gap is forced open in this way whilst on the other hand the detached silage is directly discharged from the cutting board and supplied to the receptacle 25 in an even manner.

Fig. 12 shows a cutting board 13 in which the discharge means are made up of a combination of two coupled rotatable rollers 46,47. Said rollers 46,47 may or may not be driven.

Fig. 13 finally shows a cutting board 13 in which the discharge means are made up of three rollers 48-50. The roller 48 may be configured with scraping means, for example, and be freely rotatably supported in the cutting board 13, so that said roller is driven by the silage. The rollers 49 and 50 are coupled and may or may not be driven.

It is noted that the removing unit 7 is suitable not only for the device as described herein but also for use with other types of devices for removing silage. Furthermore, the cutting board 13 fitted with discharge means 38 as described herein is also suitable for use with other types of devices and silage removing units.

Fig. 16 shows part of an embodiment of the device according to the invention, in which a special version of the conveyor 27 is used. In this case the conveyor 27 is embodied as a self-supporting conveying unit or cassette 52 as shown in Fig. 17, which comprises a frame 53 with pulleys 54 for an endless conveyor belt 55. The frame 53 may be configured with a bottom plate 56 with idlers 57. The endless conveyor belt 55 is laid over the frame 53 with the pulleys 54 from one side and subsequently the conveyor unit as a whole can be moved into the chassis of the device from the upper side, as is indicated by means of a double arrow in Fig. 16. Because of this arrangement, exchanging the endless conveyor belt 55 is relatively easy.

From the drawing it is apparent that in the device according to the invention the width of the cabin 6 amounts to approximately half the width of the chassis 1. In Figs. 2, 3 and 5 the pivot arm 9, which comprises two sub-arms 9a and 9b in the embodiment as described herein, is located beside the cabin 6. The cutting board 13 is suspended from each of said sub-arms 9a,9b by means of a linkage 15 as described herein. The cutting board 13 has a width approximately the same as the width of the chassis 1. The cutting board 13 is subjected to large forces during cutting, which forces might result in deformation of the pivot arm 9 and cause the cutting board 13 to be pulled out of true. In the embodiments described herein, the cutting board 13 is prevented from being pulled out the true in that a torsion tube 58 is mounted between the free ends of the pivot arm portions 9a,9b at the location of the rods 16.

The invention is not restricted to the embodiments as described in the foregoing, which can be varied in several ways without departing from the scope of the invention as limited by the claims.

## Claims

1. A device for removing and processing silage for cattle, comprising a chassis (1) with one or more axles (2, 4), a removing unit (7) for removing silage from a stock (8) thereof, which removing unit (7) comprises a pivot arm (9) which is pivotally supported about a pivot axis (11) at one end and which carries a removing member (13) at its free end (12), a receptacle (25) for removed silage, a container for removed silage and conveyor means (27) for conveying silage from said receptacle (25) to said container (26), wherein the removing member (13) is embodied as a cutting board (13) with at least one cutting blade (14), which cutting board (13) is provided on the inner side thereof with discharge means (38, 39, 41, 44, 46, 47, 48, 49) for discharging detached silage from the cutting board (13) and wherein said discharge means comprise at least one roller (38, 39, 41, 44, 46, 47, 48, 49), which is rotatably mounted in the cutting board (13) some distance above the cutting blade(s) (14), **characterized in that** the rotatable roller (38, 39, 41, 44, 46, 47, 48, 49) can be driven by driving means or with the help of a guide plate in a direction of rotation in which the lower half of the roller moves away from the cutting board (13).

2. A device according to claim 1, wherein the roller (39, 41) is circumferentially provided with discharge elements (40, 42), preferably with one or more helically extending strips, which generate a force towards a central region of the roller upon rotation of the roller.

3. A device according to any one of the preceding claims, wherein at least one axle (2, 4) can be driven by a driving motor supported on the chassis.

4. A device according to any one of the preceding claims, wherein the cutting board (13) is movably connected to the free end of the pivot arm (9) and a mechanism is provided for adjusting the angle of the cutting board (13) relative to the pivot arm (9), such that the spacing between the cutting blade and the pivot axis is smaller in a central position of the pivot arm (9) than in a lower and an upper position of the pivot arm.

5. A device according to claim 4, wherein the cutting board (13) is movably connected to the free end of the pivot arm (9) by means of a parallelogram linkage (15).

6. A device according to claim 5, wherein a rod of the parallelogram linkage (15) is adjustable with respect to the pivot arm (9).

7. A device according to claim 6, wherein said rod (17) is pivotally connected to a steering plate (18) that is pivotally connected to the free end of the pivot arm (9), with a steering rod being mounted between the steering plate (18) and a stationary point (22) of the device near the pivot axis (11) of the pivot arm (9).

8. A device according to any one of the preceding claims, wherein the position of the cutting board (13) relative to the pivot arm (9) can be adjusted by means of an adjusting element (37) arranged between the cutting board (13) and the pivot arm (9).

9. A device according to claim 8, wherein the bottom of the receptacle (25) comprises an insertion plate (31) having a projecting, sharply tapered insertion side (32), which insertion plate comprises at least two arcuate portions (33, 34), a first arcuate portion (33) joining said insertion side (32) and a second arcuate portion (34) joining a pulley of the conveyor means.

10. A device according to claim 9, wherein the course of said first arcuate part (33) corresponds to the path of movement of the cutting board upon movement of the cutting board (13) by the adjusting element (37).

11. A device according to claim 10, wherein the working width of the conveyor means substantially corresponds to the working width of the cutting board (13), wherein a cabin (6) for an operator is supported on the chassis above the conveyor means (27), which cabin is preferably movable in height direction.

12. A device according to claim 10, wherein the working width of the conveyor means (27) is smaller than the working width of the cutting board (13), with a third arcuate portion (35) being provided between the aforesaid two arcuate portions, in which third arcuate portion a conveyor operating in transverse direction is drivably mounted.

13. A device according to claim 12, wherein said conveyor (28) is embodied as a worm conveyor having a central shaft (29), wherein at least the part of said worm conveyor (28) that is located at the conveyor means expands conically from the centre of the insertion plate towards the outer side, in such a manner that the height of the helical worm blade decreases in relation to the conical shaft in this direction.

14. A device according to claim 10, wherein the working width of the conveyor means is smaller than the working width of the cutting board (13), with a conveyor operating in transverse direction being arranged in the receptacle beside said conveyor means for conveying silage towards the conveyor means.

15. A device according to any one of the preceding claims, wherein the conveyor means (27) are embodied as a self-supporting conveyor unit (52) which is detachably mounted in the chassis, said conveyor unit being provided with an endless conveyor belt (55), for example, which is mounted on a frame provided with pulleys (54).

## Patentansprüche

1. Eine Vorrichtung zum Entnehmen und Verarbeiten von Silage für Vieh, aufweisend ein Fahrgestell (1) mit einer oder mehr Achsen (2, 4), eine Entnahme-Einheit (7) zum Entnehmen von Silage aus einem Lager (8) davon, wobei die Entnahme-Einheit (7) einen Dreharm (9) aufweist, der an einem Ende drehbar um eine Drehachse (11) herum abgestützt ist und der an seinem freien Ende (12) ein Entnahme-Element (13) trägt, einen Behälter (25) für entnommene Silage, einen Container für entnommene Silage und Fördermittel (27) zum Befördern von Silage aus dem Behälter (25) in den Container (26), wobei das Entnahme-Element (13) als eine Schneidplatte (13) mit mindestens einer Schneidklinge (14) ausgebildet ist, wobei die Schneidplatte (13) an ihrer Innenseite mit Entladungsmitteln (38, 39, 41, 44, 46, 47, 48, 49) zum Entladen von abgelöster Silage von der Schneidplatte (13) versehen ist und wobei die Entladungsmittel mindestens eine Rolle (38, 39, 41, 44, 46, 47, 48, 49) aufweisen, die in einiger Entfernung über der (den) Schneidklinge(n) (14) drehbar in der Schneidplatte (13) montiert ist, **dadurch gekennzeichnet, dass** die drehbare Rolle (38, 39, 41, 44, 46, 47, 48, 49) von Antriebsmitteln oder mit Hilfe einer Führungsplatte in einer Drehrichtung angetrieben werden kann, in der sich die untere Hälfte der Rolle von der Schneidplatte (13) wegbewegt.

2. Eine Vorrichtung gemäß Anspruch 1, wobei die Rolle (39, 41) an ihrem Umfang mit Entladungselementen (40, 42), vorzugsweise mit einem oder mehr sich wendelförmig erstreckenden Streifen versehen ist, die beim Drehen der Rolle eine Kraft in Richtung zu einem zentralen Bereich der Rolle erzeugen.

3. Eine Vorrichtung gemäß einem der vorhergehenden Ansprüche, wobei mindestens eine Achse (2, 4) von einem an dem Fahrgestell abgestützten Antriebsmotor angetrieben werden kann.

4. Eine Vorrichtung gemäß einem der vorhergehenden Ansprüche, wobei die Schneidplatte (13) bewegbar mit dem freien Ende des Dreharms (9) verbunden ist und ein Mechanismus zum Verstellen des Winkels der Schneidplatte (13) bezüglich des Dreharms (9) vorgesehen ist, so dass der Abstand zwischen der Schneidklinge und der Drehachse in einer Zentralstellung des Dreharms (9) kleiner als in einer Hoch- und einer Tiefstellung des Dreharms ist.

5. Eine Vorrichtung gemäß Anspruch 4, wobei die Schneidplatte (13) mittels einer Parallelogramm-Gelenkverbindung (15) bewegbar mit dem freien Ende des Dreharms (9) verbunden ist.

6. Eine Vorrichtung gemäß Anspruch 5, wobei eine Stange der Parallelogramm-Gelenkverbindung (15) bezüglich des Dreharms (9) verstellbar ist.

7. Eine Vorrichtung gemäß Anspruch 6, wobei die Stange (17) drehbar mit einer Steuerplatte (18) verbunden ist, die drehbar mit dem freien Ende des Dreharms (9) verbunden ist, wobei eine Lenkstange zwischen der Steuerplatte (18) und einem stationären Punkt (22) der Vorrichtung in der Nähe der Drehachse (11) des Dreharms (9) montiert ist.

8. Eine Vorrichtung gemäß einem der vorhergehenden Ansprüche, wobei die Position der Schneidplatte (13) bezüglich des Dreharms (9) mittels eines zwischen der Schneidplatte (13) und dem Dreharm (9) angeordneten Verstellelements (37) verstellt werden kann.

9. Eine Vorrichtung gemäß Anspruch 8, wobei der Boden des Behälters (25) eine Einsetzplatte (31) aufweist, die eine hervorstehende, stark verjüngte Einsetzseite (32) aufweist, wobei die Einsetzplatte mindestens zwei bogenförmige Abschnitte (33, 34) aufweist, wobei ein erster bogenförmiger Abschnitt (33) an die Einsetzseite (32) angrenzt und ein zweiter bogenförmiger Abschnitt (34) an eine Rolle der Fördermittel angrenzt.

10. Eine Vorrichtung gemäß Anspruch 9, wobei der Verlauf des ersten bogenförmigen Teils (33) mit dem Bewegungspfad der Schneidplatte beim Bewegen der Schneidplatte (13) durch das Verstellelement (37) korrespondiert.

11. Eine Vorrichtung gemäß Anspruch 10, wobei die Arbeitsbreite der Fördermittel im Wesentlichen der Arbeitsbreite des Schneidbretts (13) entspricht, wobei eine Kabine (6) für eine Bedienperson an dem Fahrgestell über den Fördermitteln (27) abgestützt ist, wobei die Kabine vorzugsweise in einer Höhenrichtung bewegbar ist.

12. Eine Vorrichtung gemäß Anspruch 10, wobei die Arbeitsbreite der Fördermittel (27) kleiner als die Arbeitsbreite der Schneidplatte (13) ist, wobei ein dritter bogenförmiger Abschnitt (35) zwischen den vorgenannten zwei bogenförmigen Abschnitten vorgesehen ist, wobei in dem dritten bogenförmigen Abschnitt eine in Querrichtung funktionierende Fördereinrichtung antreibbar montiert ist.

13. Eine Vorrichtung gemäß Anspruch 12, wobei die Fördereinrichtung (28) als ein Schneckenförderer (29) ausgebildet ist, der eine zentrale Welle (29) aufweist, wobei zumindest der Teil des Schneckenförderers (28), der an den Fördermitteln positioniert ist, sich von der Mitte der Einsetzplatte aus konisch zu der Außenseite hin ausdehnt, so dass sich die Höhe des wendelförmigen Schneckenblatts im Verhältnis zu der konischen Welle in dieser Richtung verringert.

14. Eine Vorrichtung gemäß Anspruch 10, wobei die Arbeitsbreite der Fördermittel kleiner als die Arbeitsbreite der Schneidplatte (13) ist, wobei eine in Querrichtung funktionierende Fördereinrichtung in dem Behälter neben den Fördermitteln angeordnet ist, um Silage zu den Fördermitteln hin zu befördern.

15. Eine Vorrichtung gemäß einem der vorhergehenden Ansprüche, wobei die Fördermittel (27) als eine selbsttragende Fördereinheit (52) ausgebildet sind, die lösbar in dem Fahrgestell montiert ist, wobei die Fördereinheit zum Beispiel mit einem Endlosförderband (55) versehen ist, das an einem mit Rollen (54) versehenen Rahmen montiert ist.

## Revendications

1. Dispositif de prélèvement et de traitement de fourrage ensilé pour bétail, comprenant un châssis (1) muni d'un ou de plusieurs essieu(x) (2, 4), une unité de prélèvement (7) pour prélever du fourrage ensilé à partir d'un stock (8) de ce dernier, laquelle unité de prélèvement (7) comporte un bras pivotant (9) qui est supporté à pivotement autour d'un axe de pivotement (11) par l'une des extrémités, et qui porte un organe de prélèvement (13) à son extrémité libre (12), un réceptacle (25) dédié à du fourrage ensilé prélevé, un conteneur dévolu à du fourrage ensilé prélevé, et un moyen convoyeur (27) affecté au convoyage de fourrage ensilé depuis ledit réceptacle (25) jusqu' audit conteneur (26), sachant que l'organe de prélèvement (13) revêt la forme d'un panneau de sectionnement (13) équipé d'au moins une lame de coupe (14), lequel panneau de sectionnement (13) est doté, sur sa face intérieure, de moyens d'évacuation (38, 39, 41, 44, 46, 47, 48, 49) conçus pour évacuer du fourrage ensilé dissocié, à partir du panneau de sectionnement (13), et sachant que lesdits moyens d'évacuation comprennent au moins un rouleau (38, 39, 41, 44, 46, 47, 48, 49) monté à rotation, dans ledit panneau de sectionnement (13), à une certaine distance au-dessus de la ou des lame(s) de coupe (14), **caractérisé par le fait que** le rouleau rotatif (38, 39, 41, 44, 46, 47, 48, 49) peut être entraîné par un moyen d'entraînement, ou à l'aide d'une platine de guidage, dans une direction de rotation dans laquelle la moitié inférieure dudit rouleau effectue un mouvement l'éloignant du panneau de sectionnement (13).

2. Dispositif selon la revendication 1, dans lequel le rouleau (39, 41) est pourvu, dans le sens circonférentiel, d'éléments de décharge (40, 42), de préférence d'une ou plusieurs membrure(s) s'étendant hélicoïdalement, qui génèrent une force en direction d'une région centrale du rouleau lors d'une rotation dudit rouleau.

3. Dispositif selon l'une quelconque des revendications précédentes, dans lequel au moins l'un des essieux (2, 4) peut être entraîné par un moteur d'entraînement en appui sur le châssis.

4. Dispositif selon l'une quelconque des revendications précédentes, dans lequel le panneau de sectionnement (13) est relié à l'extrémité libre du bras pivotant (9), avec faculté de mouvement, et un mécanisme est prévu pour régler l'angle décrit par ledit panneau de sectionnement (13) par rapport audit bras pivotant (9), de façon telle que l'espacement entre la lame de coupe et l'axe de pivotement soit moindre, dans une position centrale du bras pivotant (9), que dans des positions inférieure et supérieure dudit bras pivotant.

5. Dispositif selon la revendication 4, dans lequel le panneau de sectionnement (13) est relié à l'extrémité libre du bras pivotant (9), avec faculté de mouvement, au moyen d'une tringlerie (15) de type parallélogramme.

6. Dispositif selon la revendication 5, dans lequel une tige de la tringlerie (15) de type parallélogramme est réglable par rapport au bras pivotant (9).

7. Dispositif selon la revendication 6, dans lequel ladite tige (17) est reliée, de manière pivotante, à une platine directrice (18) reliée à l'extrémité libre du bras pivotant (9), avec faculté de pivotement, une tige directrice étant montée entre ladite platine directrice (18) et un point fixe (22) dudit dispositif qui est proche de l'axe de pivotement (11) dudit bras pivotant (9).

8. Dispositif selon l'une quelconque des revendications précédentes, dans lequel la position du panneau de sectionnement (13), par rapport au bras pivotant (9), peut être réglée au moyen d'un élément de réglage (37) interposé entre ledit panneau de sectionnement (13) et ledit bras pivotant (9).

9. Dispositif selon la revendication 8, dans lequel le fond du réceptacle (25) est équipé d'une platine d'insertion (31) pourvue d'une face d'insertion saillante (32) à conicité accentuée, laquelle platine d'insertion comprend au moins deux régions courbes (33, 34), une première région courbe (33) étant rattachée à ladite face d'insertion (32), et une deuxième région courbe (34) étant rattachée à une poulie du moyen convoyeur.

10. Dispositif selon la revendication 9, dans lequel la course de ladite première partie courbe (33) correspond à la trajectoire de mouvement du panneau de sectionnement lors d'un mouvement imprimé audit panneau de sectionnement (13) par l'élément de réglage (37).

11. Dispositif selon la revendication 10, dans lequel la largeur de travail du moyen convoyeur correspond substantiellement à la largeur de travail du panneau de sectionnement (13), une cabine (6), destinée à un opérateur, étant en appui sur le châssis au-dessus dudit moyen convoyeur (27), laquelle cabine est de préférence mobile dans le sens de la hauteur.

12. Dispositif selon la revendication 10, dans lequel la largeur de travail du moyen convoyeur (27) est plus petite que la largeur de travail du panneau de sectionnement (13), une troisième région courbe (35) étant prévue entre les deux régions courbes précitées, un convoyeur, opérant dans une direction transversale, étant monté dans ladite troisième région courbe avec faculté d'entraînement.

13. Dispositif selon la revendication 12, dans lequel ledit convoyeur (28) revêt la forme d'un convoyeur à vis sans fin muni d'un arbre central (29), sachant qu'au moins la partie dudit convoyeur (28) à vis sans fin, qui est située sur le moyen convoyeur, s'élargit coniquement à partir du centre de la platine d'insertion en direction de la face extérieure, de telle sorte que la hauteur de l'ailette hélicoïdale de la vis sans fin décroisse, dans cette direction, vis-à-vis de l'arbre conique.

14. Dispositif selon la revendication 10, dans lequel la largeur de travail du moyen convoyeur est plus petite que la largeur de travail du panneau de sectionnement (13), un convoyeur opérant dans une direction transversale étant logé dans le réceptacle, à côté dudit moyen convoyeur, en vue de convoyer du fourrage ensilé en direction dudit moyen convoyeur.

15. Dispositif selon l'une quelconque des revendications précédentes, dans lequel le moyen convoyeur (27) revêt la forme d'une unité convoyeuse autosupportée (52), montée dans le châssis de manière amovible, ladite unité convoyeuse étant équipée, par exemple, d'une courroie convoyeuse sans fin (55) qui est montée sur un cadre muni de poulies (54).
